# EUROPEAN PATENT SPECIFICATION

(11) **EP 1 619 323 B1**
(45) Date of publication and mention of the grant of the patent: **11.07.2012**
(21) Application number: 04380153.9
(22) Date of filing: 19.07.2004
(51) Int. Cl.: E04H 5/04, H02B 7/08

(54) **Underground transformer substation with baffle-barrier device**
Unterirdische Transformatorenstation mit Ablenkplatte - Barrierevorrichtung
Poste de transformation souterrain avec un dispositif chicane-barrière

(43) Date of publication of application: 25.01.2006
(73) Proprietor: PREFABRICADOS UNIBLOK,S.L.U., 45223 Seseña Toledo (ES)
(72) Inventor: Apraiz Eguileor, Juan Maria, 45223 Sesena (Toleda) (ES); Baro Méndez, Emilio, 45223 Sesena (Toleda) (ES)
(74) Representative: Carpintero Lopez, Francisco

(56) References cited:
- EP-A- 0 499 592
- EP-A- 1 435 681
- WO-A-98/23017
- DE-A- 1 936 738
- DE-C- 19 727 438
- DE-U- 7 223 445

## Description

### OBJECT OF THE INVENTION

The present invention relates to a transformer substation which incorporates a protection barrier which, besides guaranteeing the safety of the passers-by, on opening the access to the interior thereof, allows optimal cooling to be achieved of the equipment housed in its interior, when the centre is in service and access thereto is closed.

It is an object of the invention that the safety barrier acts as a baffle for the conduction of air toward the low parts of the electrical equipment, thereby improving the ventilation system thereof.

### BACKGROUND OF THE INVENTION

Transformer substations are intended to house in their interior all types of electrical gear such as transformers, medium and low voltage switchboards, etc., and according to their emplacement can be either on the surface or underground, with the special particularity that the underground substations improve the visual appearance of their surroundings and in turn allow freeing of urban space.

The underground transformer substations are generally constituted by means of a chamber of appropriate dimensions that can be of civil work or prefabricated in nature, both of concrete and of other materials, which is below ground and in the interior of which is installed the different electrical equipment. This chamber is finished on top with a cover or roof which constitutes the surface on which it is possible to walk and which is closed in a fixed manner to the chamber to guarantee a good seal against dampness and water. To be able to carry out the maintenance tasks, said transformer substations have to allow access to their interior, having for this an access hatch for the operatives.

These access hatches, in their open position, have to guarantee the safety of passers-by from possibly falling accidentally into the interior of the transformer substation, to which end different systems are used. One of the most common systems is for example that represented in the utility model ES 1049753 as well as in the patents ES 2181581 and ES 2157770 in which handrails are used which, in the open position of the hatch, stand vertically around the access opening to the substation and which are generally deployed outward, in a more or less automatic manner when opening the corresponding hatch, whilst in the closed position for the hatch, they fold over the access opening below the hatch.

The previous solution implies a complicated design of the protection handrail, due to the numerous pieces and folding mechanisms which are used, increasing thereby its corresponding cost.

In addition, the hot air generated by the transformer losses rises and is evacuated through the corresponding air vent of the transformer substation, by chimney effect. To optimise this ventilation, baffle elements are generally used, like for example those described in the patents ES 2181581 and ES 2157770 which are constituted by a vertical plate arranged in a fixed form inside the substation, and which extends until near the bed of the transformer on the ground. This baffle is fixed and it divides the interior of the transformer substation into a part which is empty and another which is occupied by the electrical equipment, whereby the empty part signifies a space that cannot be used and therefore results in the transformer substation being larger in size.

The patents EP-1.435.681, EP-0.499.592, DE-1936738 and the Utility Model DE-7223445, describe underground transformer centres, which are not provided with panels having two operative positions to act as a protection and also as deflector for the cooling air.

### DESCRIPTION OF THE INVENTION

The substation of the invention incorporates a protection barrier which, besides guaranteeing the safety of passers-by in the open position of the access to the interior of the transformer substation, constitutes an interior baffle which guarantees an adequate cooling of the electrical equipment, when the access to the interior of the transformer substation is closed, without this signifying an additional need for space for the location or operation of the aforesaid baffle.

The protection barrier is constituted by one or several panels which, in the open position of the access hatch, rise up on one or several sides of the access to the substation, by means of some guide elements, and which are immobilized in their position of maximum elevation, thereby impeding the displacement of the barrier until the manoeuvring or maintenance operations finish, guaranteeing the safety of passers-by, using a solution with a simple design and reducing its corresponding cost.

In the operational position of the substation, with the hatch closed, the barrier is arranged in a vertical position, inside the substation, extending until near the bed of the electrical equipment on the ground and working as from this moment like a baffle, allowing an appropriate conduction of air toward the low parts of the electrical equipment. With this configuration unusable spaces are avoided inside the transformer substation since the protection barrier, which acts as a baffle, is mounted in the access area to the substation but is slid upward in the open position to leave free space during the maintenance operations of the substation.

The protection barrier comprises some means of manipulation which facilitate the task of both raising and lowering the same.

### DESCRIPTION OF THE DRAWINGS

To complete the description that is being made and with the object of assisting in a better understanding of the characteristics of the invention, this description is accompanied with, as an integral part thereof, a set of drawings wherein by way of illustration and not restrictively, the following has been represented:
Figure 1.. It represents a view in perspective of the operator access open with the protection barrier raised.
Figure 2.. It represents a view in perspective of the operator access open with the protection barrier lowered, working in this case as a baffle.
Figure 3.. It shows a view in perspective of the access from a position opposite to that of figure 2.
Figure 4.. It shows a view in side elevation and in cross-section of a transformer substation wherein the baffle is shown in its working position.

### PREFERRED EMBODIMENT OF THE INVENTION

Next, by way of explanation and not restrictively, an embodiment of the transformer substation is presented and of its protection barrier, in both the open position of the hatch that gives access to the interior of the substation and in the closed position thereof in which the barrier acts as a baffle for the conduction of air cooling the transformer substation.

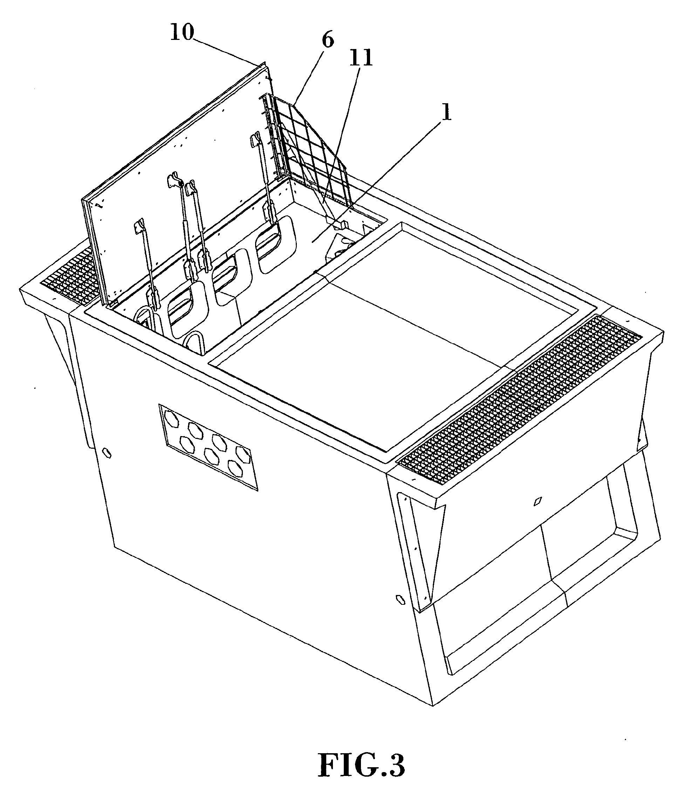

The access for the operatives to the interior of the transformer substation is made through a hatch (10), which is opened and remains open, by immobilizing said hatch (10) by means of the locking mechanism (11), such as is shown in figure 3, avoiding thereby an accidental closure thereof while the maintenance and/or manoeuvring tasks are going on.

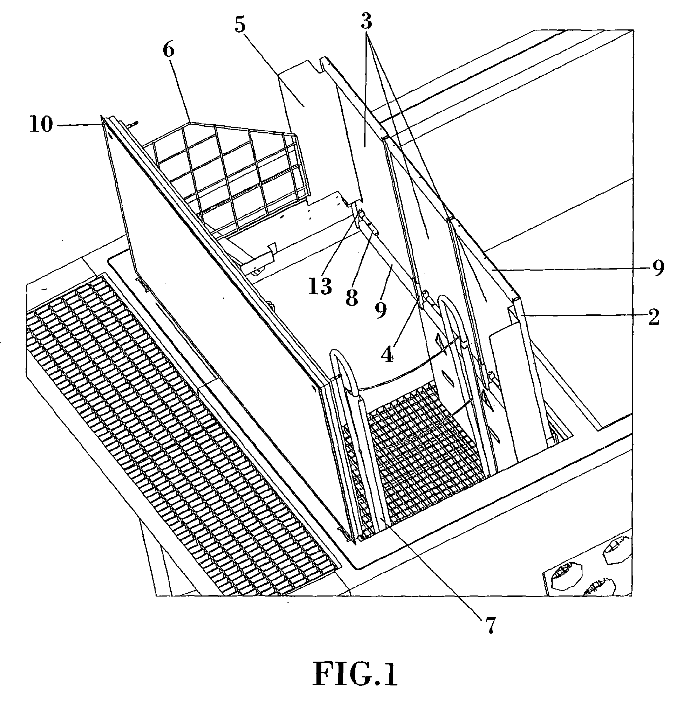

To avoid accidents, the substation object of the invention, such as is shown in figure 1, incorporates a protection barrier (2), on the opposite side to the hatch (10) which can be constituted by a single piece or by independent panels (3), of sheet metal or other materials which, in the moment of opening the access (1) slide upward to emerge on the exterior and constitute a means of safeguarding the passers-by. The raising of the protection barrier (2) is carried out with the collaboration of some means of manipulation, such as horizontal channels (9), and through some guide elements, such as rails (4) fixed to the access frame (1), until some locking mechanism elements, such as pins or bolts (8), automatically engage in their respective anchor sockets (13), thereby immobilizing the protection barrier (2) in its raised position and impeding the accidental displacement thereof which could leave the access without protection.

The horizontal channels (9) can be mounted on the upper and lower part of the panels (3), to facilitate their elevation or descent, acting also as butts limiting the operative positions of the barrier.

This protection barrier (2) incorporates some flanges (5) which close the free spaces both between the steps (7) and the barrier (2) and between the lateral protection fence (6) and the barrier (2), thereby improving safety for the passers-by.

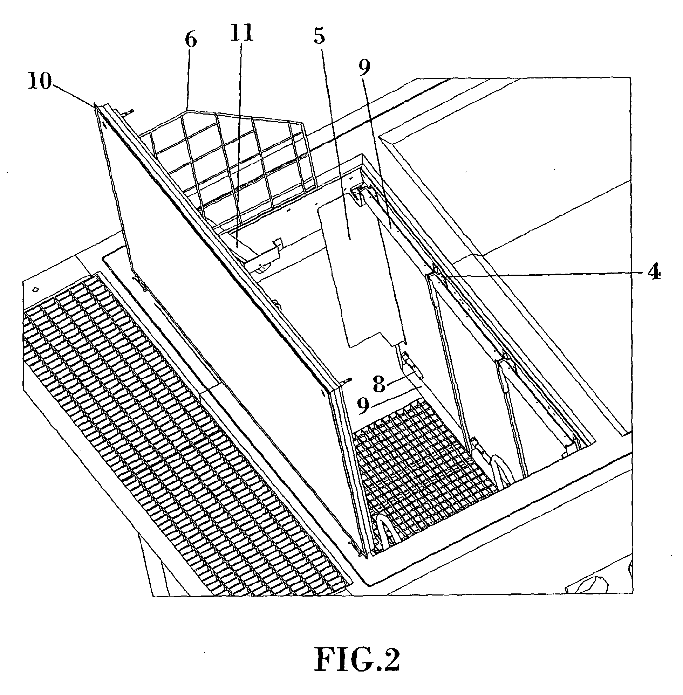

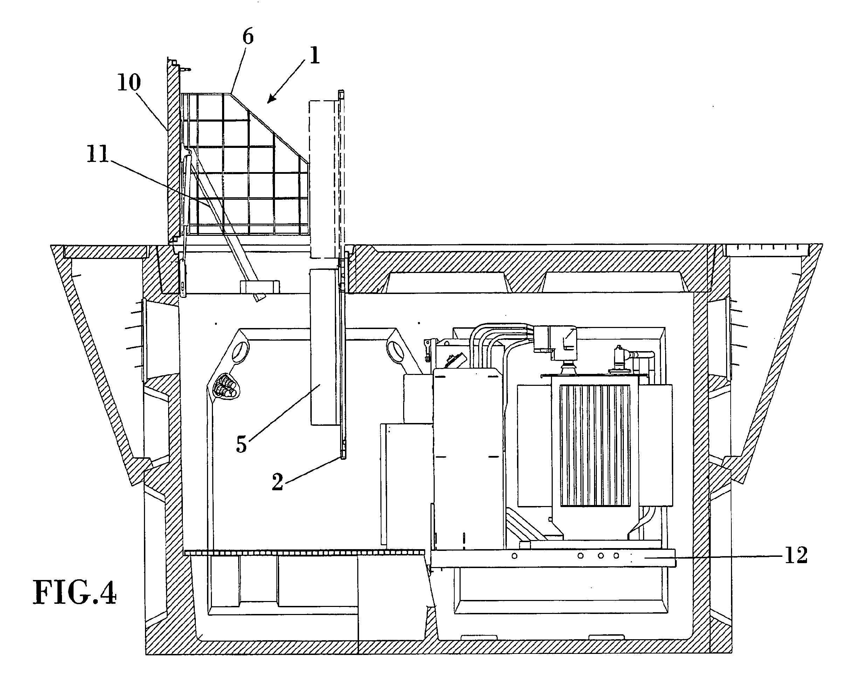

When the maintenance tasks have finished, the panels (3) which constitute the protection barrier (2) are lowered along the rails (4) until being arranged vertically inside the substation, which position is achieved when the upper channels (9) of the panels (3) abut against the aforementioned rails (4). In this position, the panels (3) extend until reaching near the bed of the electrical equipment on the ground (12), the protection barrier (2) working from this moment as a baffle, conducting the cooling air toward the low parts of the electrical equipment and thereby improving the ventilation system, such as is shown in figures 2 and 4.

## Claims

1. Underground transformer substation comprising at least an access (1) to the interior of the substation **characterised in that** said access (1) incorporates a protection barrier (2) constitued by one or several panels (3) having two different operative positions, one in which said one or several panels (3) are arranged externally to the substation, acting as a means of safeguarding the passers-by and a second position, in which said one or several panels (3) are completely inside the substation, acting as a baffle for directing the air cooling the transformer substation in the in-service position thereof.

2. Underground transformer substation according to claim 1, **characterised in that** the panel or panels (3) are arranged on one or several sides of the access opening to the substation.

3. Underground transformer substation according to claim 1, **characterised in that** the panel or panels (3) can slide in the vertical direction.

4. Underground transformer substation according to claim 3, **characterised in that** the panel or panels (3) are displaced on rails (4) mounted on the frame of the access opening to the substation.

5. Underground transformer substation according to claim 3, **characterised in that** the panel or panels (3) comprise some horizontal channels (9) which facilitate the work of displacing the panels (3) and act as a butt limiting their operative positions.

6. Underground transformer substation according to claim 1, **characterised in that** the panel or panels (3), in their lowermost position, reach near to the bed of the electrical equipment on the ground (12).

7. Underground transformer substation according to claim 1, **characterised in that** the panel or panels (3) have a locking mechanism (8) for the purpose of preventing the displacement of the panels (3) in the open position of the access (1).

8. Underground transformer substation according to claim 7, **characterised in that** the locking mechanisms (8) are bolts which in the moment of opening the access (1), when the panels (3) are raised, automatically engage in their respective anchor sockets, thereby impeding the displacement of the panels (3).

9. Underground transformer substation according to claim 1, **characterised in that** the panel or panels (3) incorporate on their ends some flanges (5) which in the open position of the access (1) close the free space both between the barrier (2) and the stairway (7) and between said barrier (2) and the lateral protection fence (6).

## Patentansprüche

1. Unterirdische Transformatorenstation, umfassend zumindest einen Zugang (1) zum Inneren der Station, **dadurch gekennzeichnet, dass** der Zugang (1) eine Schutzabsperrung (2) umfasst, die durch eine oder mehrere Platten (3) mit zwei verschiedenen Betriebspositionen gebildet ist, eine, in der die eine oder mehrere Platten (3) außerhalb der Station angeordnet sind und als Mittel zum Schützen der Passanten wirken, und eine zweite Position, in der die eine oder mehrere Platten (3) vollständig innerhalb der Station sind und als Ablenkplatte zum Leiten der Luft wirken, die die Transformatorenstation in der Betriebsposition davon kühlt.

2. Unterirdische Transformatorenstation nach Anspruch 1, **dadurch gekennzeichnet, dass** die Platte oder Platten (3) auf einer oder mehreren Seiten der Zugangsöffnung zu der Station angeordnet sind.

3. Unterirdische Transformatorenstation nach Anspruch 1, **dadurch gekennzeichnet, dass** die Platte oder Platten (3) in der vertikalen Richtung gleiten können.

4. Unterirdische Transformatorenstation nach Anspruch 3, **dadurch gekennzeichnet, dass** die Platte oder Platten (3) auf Schienen (4) verschoben werden, die an dem Rahmen der Zugangsöffnung zu der Station angebracht sind.

5. Unterirdische Transformatorenstation nach Anspruch 3, **dadurch gekennzeichnet, dass** die Platte oder Platten (3) horizontale Kanäle (9) umfassen, die die Verschiebungsarbeit der Platten (3) erleichtern und als Anschlag wirken, die ihre Betriebspositionen begrenzen.

6. Unterirdische Transformatorenstation nach Anspruch 1, **dadurch gekennzeichnet, dass** die Platte oder Platten (3) in ihrer untersten Position in die Nähe der Lage der elektrischen Ausstattung auf dem Grund (12) reichen.

7. Unterirdische Transformatorenstation nach Anspruch 1, **dadurch gekennzeichnet, dass** die Platte oder Platten (3) einen Verriegelungsmechanismus (8) zum Zweck des Verhinderns der Verschiebung der Platten (3) in die offene Position des Zugangs (1) aufweisen.

8. Unterirdische Transformatorenstation nach Anspruch 7, **dadurch gekennzeichnet, dass** der Verriegelungsmechanismus (8) Bolzen sind, die im Moment des Öffnens des Zugangs (1), wenn die Platten (3) angehoben werden, automatisch in ihre jeweiligen Verankerungsfassungen eingreifen, wodurch sie die Verschiebung der Platten (3) hemmen.

9. Unterirdische Transformatorenstation nach Anspruch 1, **dadurch gekennzeichnet, dass** die Platte oder Platten (3) an ihren Enden Flansche (5) umfassen, die in der offenen Position des Zugangs (1) den Freiraum sowohl zwischen der Absperrung (2) und der Treppe (7) als auch zwischen der Absperrung (2) und dem seitlichen Schutzzaun (6) schließen.

## Revendications

1. Poste de transformation souterrain comprenant au moins un accès (1) à l'intérieur du poste, **caractérisé en ce que** ledit accès (1) comprend une barrière de protection (2) constituée par un ou plusieurs panneaux (3) ayant deux positions opérationnelles différentes, dans l'une desquelles l'un parmi lesdits un ou plusieurs panneaux (3) est agencé à l'extérieur du poste, servant de moyens de protection pour les passagers et une seconde position dans laquelle lesdits un ou plusieurs panneaux (3) sont complètement à l'intérieur du poste, servant de chicane pour diriger l'air refroidissant le poste de transformation dans sa position de service.

2. Poste de transformation souterrain selon la revendication 1, **caractérisé en ce que** le panneau ou les panneaux (3) est (sont) agencé (s) sur un ou plusieurs côtés de l'ouverture d'accès au poste.

3. Poste de transformation souterrain selon la revendication 1, **caractérisé en ce que** le panneau ou les panneaux (3) peut (peuvent) coulisser dans la direction verticale.

4. Poste de transformation souterrain selon la revendication 3, **caractérisé en ce que** le panneau ou les panneaux (3) est (sont) déplacé(s) sur des rails (4) montés sur le châssis de l'ouverture d'accès au poste.

5. Poste de transformation souterrain selon la revendication 3, **caractérisé en ce que** le panneau ou les panneaux (3) comprend (comprennent) certains canaux horizontaux (9) qui facilitent le travail de déplacement des panneaux (3) et servent de butée limitant leurs positions opérationnelles.

6. Poste de transformation souterrain selon la revendication 1, **caractérisé en ce que** le panneau ou les panneaux (3), dans sa (leur) position la plus basse, atteint (atteignent) la proximité du lit de l'équipement électrique sur le sol (12).

7. Poste de transformation souterrain selon la revendication 1, **caractérisé en ce que** le panneau ou les panneaux (3) a (ont) un mécanisme de blocage (8) afin d'empêcher le déplacement des panneaux (3) dans la position ouverte de l'accès (1).

8. Poste de transformation souterrain selon la revendication 7, **caractérisé en ce que** les mécanismes de blocage (8) sont des boulons qui, au moment de l'ouverture de l'accès (1), lorsque les panneaux (3) sont levés, se mettent en prise automatiquement dans leurs douilles d'ancrage respectives, empêchant ainsi le déplacement des panneaux (3).

9. Poste de transformation souterrain selon la revendication 1, **caractérisé en ce que** le panneau ou les panneaux (3) comprend (comprennent) dans leurs extrémités certains rebords (5) qui, dans la position ouverte de l'accès (1), ferment l'espace libre à la fois entre la barrière (2) et la cage d'escalier (7) et entre ladite barrière (2) et la clôture de protection latérale (6).
